# DEMANDE DE BREVET EUROPEEN

(11) **EP 2 189 329 A1**
(43) Date de publication de la demande: **26.05.2010**
(21) Numéro de dépôt: 09290864.9
(22) Date de dépôt: 16.11.2009
(51) Int. Cl.: B60N 2/48

(54) **Composant de garnissage de véhicule automobile**

(30) Priorité: 20.11.2008 FR 0806520
(71) Demandeur: Centre d'Etude et de Recherche pour l'Automobile (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un composant (1) de garnissage de véhicule automobile comprenant une palette (2) structurelle d'envers comprenant une face d'appui (3) et une face d'envers (4) ; une couche (5) de matériau de rembourrage élastiquement compressible recouvrant ladite face d'appui ; un format (6) de matériau de revêtement recouvrant ladite couche, la périphérie dudit format comprenant un moyen de logement (7) d'un cordon (8) en coulissement, une bande périphérique (9) dudit format étant repliée en regard de ladite face d'envers, ledit cordon disposé dans ledit moyen de logement formant une boucle tendue afin de plaquer ledit format contre ladite couche, ledit composant comprenant en outre au moins une saillie (10) issue de ladite face d'envers, ladite saillie étant agencée pour former butée limitant la pénétration radiale de ladite boucle vers l'intérieur.

## Description

L'invention concerne un composant de garnissage de véhicule automobile tel qu'un appui-tête de siège.

Il est connu de réaliser un composant de garnissage de véhicule automobile comprenant :
- une palette structurelle d'envers comprenant une face d'appui et une face d'envers,
- une couche de matériau de rembourrage élastiquement compressible recouvrant ladite face d'appui,
- un format de matériau de revêtement recouvrant ladite couche, la périphérie dudit format comprenant un moyen de logement d'un cordon en coulissement, une bande périphérique dudit format étant repliée en regard de ladite face d'envers, ledit cordon disposé dans ledit moyen de logement formant une boucle tendue afin de plaquer ledit format contre ladite couche.

Dans un tel agencement, le revêtement est mis en tension. En fonction de la forme de la palette, certaines zones du revêtement peuvent présenter une surtension, ce qui a pour effet de réaliser une surcompression dans les zones correspondantes de la couche de rembourrage. Il en résulte une esthétique disgracieuse.

Par exemple, dans le cas d'une palette sensiblement rectangulaire, on observe une surtension du revêtement au niveau des angles de la palette, cette surcompression localisée de la couche de rembourrage produisant un défaut angulaire visuel.

L'invention a pour but de pallier cet inconvénient.

A cet effet, l'invention propose un composant de garnissage de véhicule automobile comprenant :
- une palette structurelle d'envers comprenant une face d'appui et une face d'envers,
- une couche de matériau de rembourrage élastiquement compressible recouvrant ladite face d'appui,
- un format de matériau de revêtement recouvrant ladite couche, la périphérie dudit format comprenant un moyen de logement d'un cordon en coulissement, une bande périphérique dudit format étant repliée en regard de ladite face d'envers, ledit cordon disposé dans ledit moyen de logement formant une boucle tendue afin de plaquer ledit format contre ladite couche,
ledit composant comprenant en outre au moins une saillie issue de ladite face d'envers, ladite saillie étant agencée pour former butée limitant la pénétration radiale de ladite boucle vers l'intérieur.

La présence d'une telle saillie permet de limiter la mise en tension du revêtement et de limiter la compression de ladite couche à l'aplomb de ladite saillie.

D'autres particularités et avantages de l'invention apparaîtront dans la description qui suit, faite en référence aux figures jointes dans lesquelles :
- la figure 1 est une vue schématique en coupe partielle d'un composant selon une réalisation,
- la figure 2 est une vue en perspective de la palette du composant de la figure 1.

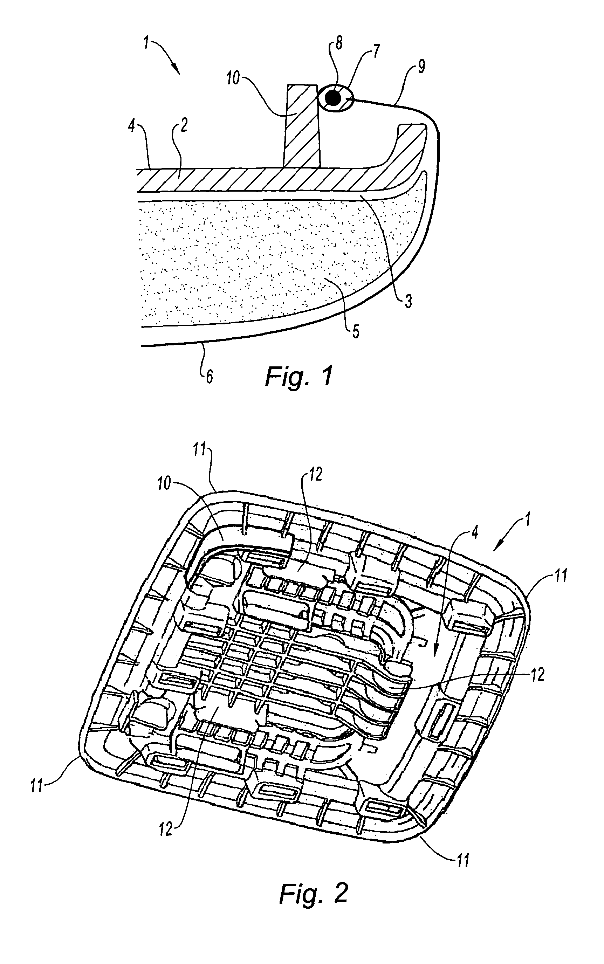

En référence aux figures, on décrit un composant 1 de garnissage de véhicule automobile comprenant :
- une palette 2 structurelle d'envers comprenant une face d'appui 3 et une face d'envers 4,
- une couche 5 de matériau de rembourrage élastiquement compressible recouvrant ladite face d'appui,
- un format 6 de matériau de revêtement recouvrant ladite couche, la périphérie dudit format comprenant un moyen de logement 7 - ici sous forme d'un surjet ou ourlet - d'un cordon 8 en coulissement, une bande périphérique 9 dudit format étant repliée en regard de ladite face d'envers, ledit cordon disposé dans ledit moyen de logement formant une boucle tendue afin de plaquer ledit format contre ladite couche,
ledit composant comprenant en outre au moins une saillie 10 issue de ladite face d'envers, ladite saillie étant agencée pour former butée limitant la pénétration radiale de ladite boucle vers l'intérieur, afin de limiter la mise en tension du revêtement et de limiter la compression de ladite couche à l'aplomb de ladite saillie. En effet, lors de la tension de la boucle, celle-ci à tendance à se rétracter radialement vers l'intérieur (sur la gauche de la figure 1), ce que la butée 10 vise à limiter.

Selon une réalisation, la palette 2 est à base de matière plastique moulée, au moins une saillie 10 étant issue de matière de la face d'envers 4 de ladite palette.

Selon la réalisation représentée, la palette 2 présente une forme sensiblement rectangulaire, une saillie 10 étant disposée dans une zone de coin 11 de ladite palette, ladite zone de coin étant une zone de tension maximale.

Selon la réalisation représentée en figure 2, les coins 11 de la palette 2 sont arrondis.

De façon non représentée, la palette 2 comprend quatre saillies 10 disposées respectivement dans ses quatre zones de coin 11 qui sont toutes des zones de tension maximale.

Selon une réalisation non représentée, le composant 1 comprend une seule saillie 10 en forme de couronne, afin de limiter la pénétration de la boucle sur tout son périmètre.

Selon la réalisation représentée, la palette 2 comprend un moyen d'association 12 - ici sous forme de trois clips - à une armature métallique de montage - notamment sous forme de tube replié en U - sur un haut de dossier de siège, de sorte que le composant 1 forme appui-tête de siège de véhicule automobile.

Selon une réalisation non représentée, le composant 1 comprend une pièce de masquage de la face d'envers 4.

## Revendications

1. Composant (1) de garnissage de véhicule automobile comprenant :
• une palette (2) structurelle d'envers comprenant une face d'appui (3) et une face d'envers (4),
• une couche (5) de matériau de rembourrage élastiquement compressible recouvrant ladite face d'appui,
• un format (6) de matériau de revêtement recouvrant ladite couche, la périphérie dudit format comprenant un moyen de logement (7) d'un cordon (8) en coulissement, une bande périphérique (9) dudit format étant repliée en regard de ladite face d'envers, ledit cordon disposé dans ledit moyen de logement formant une boucle tendue afin de plaquer ledit format contre ladite couche,
ledit composant étant **caractérisé en ce qu'**il comprend en outre au moins une saillie (10) issue de ladite face d'envers, ladite saillie étant agencée pour former butée limitant la pénétration radiale de ladite boucle vers l'intérieur.

2. Composant selon la revendication 1, **caractérisé en ce que** la palette (2) est à base de matière plastique moulée, au moins une saillie (10) étant issue de matière de la face d'envers (4) de ladite palette.

3. Composant selon l'une quelconque des revendications 1 ou 2, **caractérisé en ce que** la palette (2) présente une forme sensiblement rectangulaire, au moins une saillie (10) étant disposée dans une zone de coin (11) de ladite palette.

4. Composant selon la revendication 3, **caractérisé en ce qu'**il comprend quatre saillies (10) disposées respectivement dans ses quatre zones de coin (11).

5. Composant selon l'une quelconque des revendications 1 ou 2, **caractérisé en ce qu'**il comprend une seule saillie (10) en forme de couronne, afin de limiter la pénétration de la boucle sur tout son périmètre.

6. Composant selon l'une quelconque des revendications 1 à 5, **caractérisé en ce que** la palette (2) comprend un moyen d'association (12) à une armature métallique de montage sur un haut de dossier de siège, de sorte que ledit composant forme appui-tête de siège de véhicule automobile.

7. Composant selon l'une quelconque des revendications 1 à 6, **caractérisé en ce qu'**il comprend une pièce de masquage de la face d'envers (4).
